# EUROPÄISCHE PATENTANMELDUNG

(11) **EP 1 202 173 A2**
(43) Veröffentlichungstag der Anmeldung: **02.05.2002**
(21) Anmeldenummer: 01000302.8
(22) Anmeldetag: 18.07.2001
(51) Int. Cl.: G06F 9/46, G06F 17/30

(54) **System zur effizienten Übertragung von Teilobjekten in verteilten Datenbanken**

(30) Priorität: 19.07.2000 DE 10035140
(71) Anmelder: Philips Corporate Intellectual Property GmbH, 52064 Aachen (DE); Koninklijke Philips Electronics N.V., 5621 BA Eindhoven (NL)
(72) Erfinder: Baumeister, Markus, Habsburgerallee 11 52064 Aachen (DE); Hauptmann, Steffen, Dr., Habsburgerallee 11 52064 Aachen (DE); Klabunde, Karin, Habsburgerallee 11 52064 Aachen (DE)
(74) Vertreter: Volmer, Georg, Dipl.-Ing.

(57) **Zusammenfassung**

Die Erfindung bezieht sich auf ein Netzwerk mit Netzwerkknoten (1 bis 5) und einem auf allen Netzwerkknoten (1 bis 5) verteilten Softwaresystem mit einer als Verteilungsunterstützung (12 bis 14) bezeichneten Softwarekomponente auf jedem Netzwerkknoten (1 bis 5) zum Zugriff auf die Daten einer verteilten Datenbank (31), und zur Kommunikation mit anderen Verteilungsunterstützungen (12 bis 14) unterschiedlicher Netzwerkknoten. Eine als Datenmanager (15 bis 19) bezeichneten Softwarekomponente dient als Verbindung der Datenbank (31) mit anderen Komponenten und beinhaltet eine Callback-Komponente (20 bis 24) zum Zugriff auf wenigsten ein Element (28) eines Datenobjekts (29). Anhand eines aus zwei Teilen bestehenden Schlüssels, dessen erster Teil ein Verteilungsunterstützungs-Schlüssel (33) zur Identifizierung eines Datenobjektes (29) durch die Verteilungsunterstützung (12 bis 14) ist, und dessen zweiter Teil, ein Datenmanager-Schlüssel (34) zur Identifizierung wenigstens eines gesuchten Elements (28) eines Datenobjekts (29) ist, kann sowohl auf das Datenobjekt (29) als auch auf einzelne Elemente (28) des Datenobjekts (29) zugegriffen werden.

## Beschreibung

Die Erfindung bezieht sich auf ein Netzwerk mit Netzwerkknoten und einem auf allen Netzwerkknoten verteilten Softwaresystem.

Ein solches Netzwerk ist aus Ralf Steinmetz (Hrsg.): "Kommunikation in verteilten Systemen (KiVS)", 11. ITG,GI-Fachtagung, Darmstadt, 2.-5. März 1999; Stephan Abramowski, Heribert Baldus, Tobias Helbig: "Digitale Netze in Wohnungen - Unterhaltungselektronik im Umbruch", Seiten 340 bis 351, bekannt. Es werden in dieser Veröffentlichung Anforderungen für ein zukünftiges Netzwerk im Heimbereich mit der darin verwendeten Software beschrieben. Wie in einem solchen Netzwerk mit einem verteilten Softwaresystem eine effiziente Übertragung von einzelnen Elementen eines Datenobjektes beim Datenzugriffen in verteilten Datenbanken realisiert wird, ist nicht näher erläutert worden.

Der Erfindung liegt die Aufgabe zugrunde, ein Netzwerk mit einem Softwaresystem zu schaffen, bei welchem eine effiziente Übertragung von Datenobjekten und von Elementen eines Datenobjektes mit einer geringen Anzahl an Datenzugriffen im Rahmen begrenzter Speicher und Prozessorressourcen realisiert werden kann.

Die Aufgabe wird durch ein Netzwerk der eingangs genannten Art dadurch gelöst, dass das verteilte Softwaresystem
- eine als Verteilungsunterstützung bezeichnete Softwarekomponente auf jedem Netzwerkknoten zum Zugriff auf die Daten einer verteilten Datenbank, und zur Kommunikation mit anderen Verteilungsunterstützungen unterschiedlicher Netzwerkknoten enthält, und
- mindestens eine als Datenmanager bezeichnete Softwarekomponente, die als Verbindung der Datenbank mit anderen Komponenten dient und eine Callback-Komponente zum Zugriff auf wenigstens ein Elemente eines Datenobjekts beinhaltet, und
- mit einem aus zwei Teilen bestehenden Schlüssel, dessen erster Teil ein Verteilungsunterstützungs-Schlüssel zur Identifizierung eines Datenobjektes durch die Verteilungsunterstützung ist, und dessen zweiter Teil, ein Datenmanager-Schlüssel zur Identifizierung wenigstens eines gesuchten Elements in einem Datenobjekt ist.

Im Netzwerk mit mehreren Netzwerkknoten und einem auf allen Netzwerkknoten verteilten Softwaresystem wird die notwendige Funktionalität einer effizienten, verteilten Datenbank auf zwei Komponenten aufgeteilt.

Die aufgrund der Verteilung der Daten bestehenden Aufgaben (z.B. Replikation, Konsistenzsicherheit der Daten) werden durch eine als Verteilungsunterstützung bezeichnete Softwarekomponente gelöst, die einmal auf jedem Netzwerkknoten vorhanden ist. Die Verteilungsunterstützung ist für den Zugriff auf die Daten der verteilten Datenbank und für die Kommunikation mit anderen Verteilungsunterstützungen unterschiedlicher Netzwerkknoten verantwortlich.

Die zweite Softwarekomponente ist ein Datenmanager, der eine Verbindung der Datenbank zu anderen Komponenten wie z.B. Anwendung eines Benutzers darstellt. Der Datenmanager wird von der Verteilungsunterstützung durch eine Callback-Komponente zur Interpretation der für die Verteilungsunterstützung unstrukturierten Daten genutzt. Er bereitet die Daten in ein für die Verteilungsunterstützung verständliches Format auf. Auf jedem Netzwerkknoten können mehrere Datenmanager vorhanden sein.

Datenzugriffe werden häufig sowohl auf vollständige Datenobjekte erfolgen (z.B. ein Präferenzeditor, der alle Präferenzen eines Benutzers grafisch darstellt) als auch auf einzelne Elemente (z.B. eine Anwendung, die nur eine oder wenige Präferenzen eines Benutzers benötigt). Anhand eines zweiteiligen Schlüssels kann sowohl ein ganzes Datenobjekt als auch ein einzelnes Element eines Datenobjekts identifiziert werden. Der Schlüssel besteht zu einem aus einem Verteilungsunterstützungs-Schlüssel, mit Hilfe dessen die Verteilungsunterstützung das gesuchte Datenobjekt innerhalb der verteilten Datenbanken lokalisiert. Zum anderen kann jeder Datenmanager mit Hilfe eines sogenannten Datenmanager-Schlüssels Spezifizieren, auf welches Element des Datenobjektes er zugreifen möchte. Anhand des ihm übergebenen Datenmanager-Schlüssels kann der Datenmanager das gesuchte Element dem Datenobjekt entnehmen und der Verteilungsunterstützung des selben Netzwerkknotens übergeben. Die Verteilungsunterstützung leitet das Element weiter an die Verteilungsunterstützung des anfragenden Datenmanagers, welcher den Datenmanager-Schlüssel übergeben hat.

Da der Datenmanager-Schlüssel durch Datenmanager der gleichen Funktionalität generiert und ausgewertet wird, kann die Syntax und der Inhalt des Datenmanager-Schlüssels für den jeweiligen Datenmanager speziell definiert werden, und somit der von diesem Datenmanager verwalteten Struktur der Daten angepasst werden. Wird durch den Datenmanager kein Schlüssel übergeben, so gibt die Verteilungsunterstützung das vollständige, durch den Verteilungsunterstützungs-Schlüssel identifizierte Datenobjekt zurück. Dieses Datenobjekt wird dann durch den Datenmanager entweder direkt an die Anwendung des Benutzers zurückgegeben oder zuerst durch die im Datenmamager vorhandene Callback-Komponente in seine Elemente zerlegt. Dadurch können viele Einzelzugriffe auf Elemente, die auf entfernten Netzwerkknoten gespeichert sind, durch einen Zugriff auf das Datenobjekt, welches das gesuchte Element enthält, ersetzt werden.

Falls ein Netzwerkknoten durch eine Störung ausfällt, wird die Verteilungsunterstützung informiert, damit diese z.B. die Replikation der Daten entsprechend anpassen kann. Beim Hinzufügen eines neuen Netzwerkknotens sorgt die Verteilungsunterstützung für die Integration des Netzwerkknotens und Aktualisierung seiner Daten im Netzwerk. Um diese und andere Aufgaben zu lösen, nutzt die Verteilungsunterstützung die Dienste und Informationen der Callback-Komponente der unterschiedlichen Datenmanager. Die Dienste und Informationen können z.B. das Lesen von Elementen eines Datenobjekts, das Schreiben von Elementen eines Datenobjekts, das Vereinigen (Merge) zweier Versionen eines Datenobjekts und Hinweise zur gewünschten Replikation eines Datenobjekts sein.

Der lokale Speicherverwalter ist für die Verwaltung der Datenbank des Netzwerkknotens verantwortlich. Der lokale Speicherverwalter wird von der Verteilungsunterstützung aufgefordert, seine Datenbank zu verändern.

Ein Ausführungsbeispiel der Erfindung wird nachstehend anhand der Figuren näher erläutert. Es zeigen:
- Fig. 1: ein Netzwerk mit verschiedenen Netzwerkknoten,
- Fig. 2: verschiedene Softwareebenen des im Netzwerk verwendeten Softwaresystems,
- Fig. 3: beispielhafte Darstellung dreier Netzwerkknoten mit den Softwarekomponenten
- Fig. 4: prinzipielle /funktionelle Darstellung beim Zugriff auf ein Element eines Datenobjekts von einem abgelegenen Netzwerkknoten auf einen lokalen Netzwerkknoten,
- Fig. 5: Zeichengabeablaufdiagramm zur zeitlichen Darstellung der Reihenfolge der Aktionen während eines Lesevorgangs,
- Fig. 6: Zeichengabeablaufdiagramm zur zeitlichen Darstellung der Reihenfolge der Aktionen während eines Schreibvorgangs.

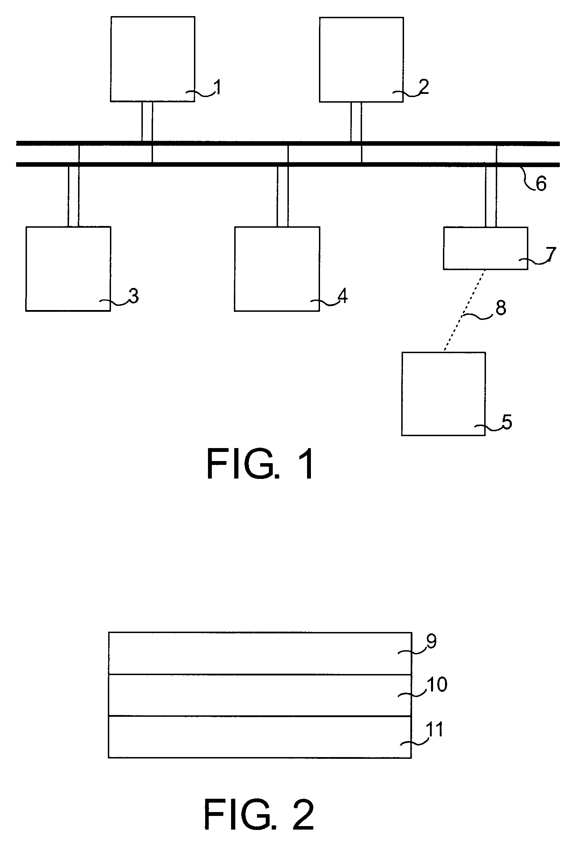

Fig. 1 zeigt ein Netzwerk, welches verschiedene Netzwerkknoten 1 bis 5 über ein Bussystem 6 miteinander koppelt. Die Netzwerkknoten 1 bis 5 können auch über eine drahtlose Verbindung 7 und eine Sende-/Empfangsstation 8 mit dem Bussystem 6 gekoppelt werden. Hierbei können z.B. Infrarot-, Ultraschall- oder Funkverbindungen verwendet werden. Solche Netzwerkknoten können PCs und Geräte der Unterhaltungselektronik, wie z.B. Fernsehgerät, Set-Top-Box, Tuner, Kamera, digitaler Videorecorder, CD-Spieler sein.

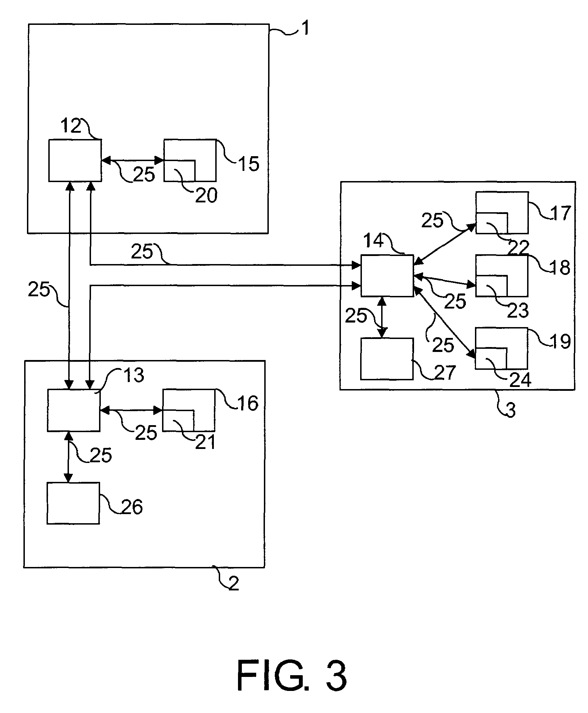

In Fig. 2 ist das Softwaresystem dargestellt, welches aus verschiedenen Softwareebenen besteht, die auf das Betriebssystem aufsetzen. Die oberste Softwareebene ist eine Anwendungsebene 9. Die folgende Softwareebene ist eine Infrastrukturebene 10 und die unterste Softwareebene ist eine Netzwerkebene 11.
Ein Beispiel für die Verteilung und Zusammenarbeit von Softwarekomponenten der Infrastrukturebene 10 zeigt Fig. 3. Die Softwarekomponenten der Infrastrukturebene 10 zur Infrastrukturverwaltung von drei Netzwerkknoten 1 bis 3 bestehen aus mehreren Verteilungsunterstützungen 12 bis 14 und mehreren Datenmanager 15 bis 19. Jeder Datenmanager 15 bis 19 enthält eine Callback-Komponente 20 bis 24. Eine Callback-Komponente 20 bis 24 dient zur Zerlegung eines aus mehreren Elementen 28 bestehenden Datenobjekts 29. Die Verteilungsunterstützungen 12 bis 14 lösen alle aufgrund der Verteilung der Daten entstehenden Aufgaben, z.B. replizieren sie die Daten der Datenbanken. Die zur Aufbereitung der Daten für die Anwendung notwendigen Aufgaben sowie Aufgaben, welche die Kenntnis der inneren Struktur der Daten erfordern, werden durch den jeweiligen Datenmanager 15 bis 19 behandelt.

Auf jedem der drei Netzwerkknoten 1 bis 3 befinden sich die Verteilungsunterstützungen 12 bis 14 und mindestens ein Datenmanager 15 bis 19. In diesem Beispiel stellen die Datenmanager 15, 16 und 17 Datenstrukturen zur Verfügung, die auf jedem der drei Knoten verfügbar sind. Die von den Datenmanager 18 und 19 bereitgestellten Datenstrukturen enthalten Daten, auf die nur auf dem Netzwerkknoten 3 zugegriffen werden kann. Jeder Datenmanager 15 bis 19 enthält eine Callback-Komponente 20 bis 24. Die Callback-Komponente 20 bis 24 und die Verteilungsunterstützungen 12 bis 14 jedes Netzwerkknotens 1 bis 5 kommunizieren miteinander durch unterschiedliche Methodenaufrufe und - rückgabewerte. Sie werden durch die mit den Bezugszeichen 25 dargestellten Doppelpfeile repräsentiert und im folgenden vereinfacht als Methode 25 benannt.

Der Datenmanager 15 bis 19 registriert sich während der Initialisierung des Softwaresystems bei der jeweils lokalen Verteilungsunterstützung 12 bis 14 und teilt ihr durch die Methode 25 mit, für welche Daten mit welchem Präfix des Schlüssels die Callback-Komponente 20 bis 24 die Methode 25 zu Verfügung stellt. Zusätzlich kann sich auch ein lokaler Speicherverwalter 26 und 27 auf dem Netzwerkknoten 1 bis 5 befinden, der für die Verwaltung auf dem Netzwerkknoten 1 bis 5 gespeicherter Daten verantwortlich ist. Die lokalen Speicherverwalter 26 und 27 kommunizieren mittels der Methode 25 ausschließlich mit der jeweiligen Verteilungsunterstützung 13 und 14 seines Netzwerkknotens 1 bis 3 . Befindet sich kein lokaler Speicherverwalter auf dem Netzwerkknoten 1, so kann die Verteilungsunterstützung 12 keine Datenzugriffe auf dem lokalen Netzwerkknoten ausführen und muss alle Anfragen an die Verteilungsunterstützungen 13 und 14 weiterleiten. Die Kommunikation zwischen den Verteilungsunterstützungen 12 bis 14 der einzelnen Netzwerkknoten 1 bis 5 findet durch die unterschiedliche Methoden 25 statt.

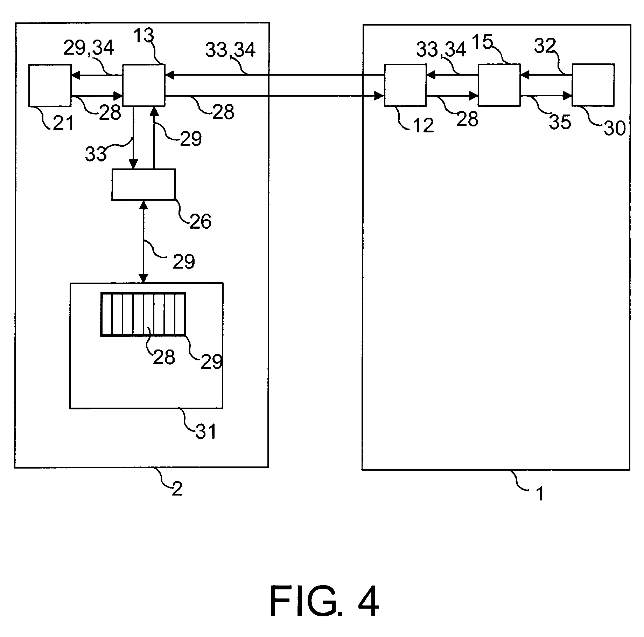

Fig. 4 beschreibt den funktionellen Ablauf beim Zugriff auf ein Element 28 eines Datenobjekts 29, welches auf einem abgelegenen Netzwerkknoten 2 gespeichert ist, durch eine am Netzwerkknoten 1 gestartete Anwendung 30. Hierbei repräsentieren die in den Fig. 4 dargestellten Pfeile jeweils einen Methodenaufruf bzw. eine Methodenwiedergabe mit der Übergabe der anhand der Bezugszeichen gekennzeichneten Komponente. Während der Verteilung der Daten erhalten die Verteilungsunterstützungen 12 bis 14 die zu speichernden Daten als binäre Datenobjekte 29, d.h. ihnen sind die Größe (Länge) des Datenobjekts 29 bekannt, aber sie besitzen kein Wissen über seine. Das Datenobjekt 29 besteht aus mehreren Elementen 28, die nicht näher beschrieben werden. Nachdem der Benutzer die Anwendung 30 gestartet hat, stellt diese fest, dass ein Element 28 eines Datenobjekts 29 benötigt wird, welches sich in einer Datenbank 31 auf einen abgelegenen Netzwerkknoten 2 befindet. Die Anwendung 30 schickt eine Anfrage 32 an den Datenmanager 15. Die Anwendung 30 kann den Datenmanager 15 auch direkt enthalten, wenn sie als einzige für den Zugriff auf die entsprechenden Daten vorgesehen ist.
Der Datenmanager 15 bestimmt aus der Anfrage 32 die zwei Schlüssel, anhand derer er das gesuchte Element bei der Verteilungsunterstützung 12 erhalten kann, einen Verteilungsunterstützungs-Schlüssel (VU-Schlüssel) 33 und einen Datenmanager-Schlüssel (DM-Schlüssel) 34.

Ein VU-Schlüssel 33 ist eine Reihenfolge (Sequenz) von Bytes, welche zur Identifizierung von Datenobjekten 29 dient. Die Datenobjekte 29 werden während der Speicherung durch die Verteilungsunterstützungen 12 bis 14 unter jeweils einem VU-Schlüssel 33 im Netzwerk abgelegt. Die ersten beiden Bytes des VU-Schlüseels 33 geben die zugehörige Callback-Komponente 20 bis 24 an, für die die Daten bestimmt sind. Durch dieses Präfix werden Konflikte zwischen den unterschiedlichen Callback-Komponente 20 bis 24 vermieden. Die restlichen Bytes können beliebig gesetzt werden. Zwei anhand des gleichen VU-Schlüssels 33 gespeicherte Datenobjekte 29 sind identisch, d.h. sie enthalten die gleichen Daten.

Die Syntax des DM-Schlüssels 34 ist spezifisch für den erzeugenden Datenmanager 15 bis 19 und damit auch der auswertenden Callback-Komponenete 20 bis 24. Der DM-Schlüssel 34 kann unbesetzt sein oder der Datenmanagar 15 bis 19 nutzt ihn als Parameter, um auf ein Element 28 eines Datenobjektes 29 zu zugreifen, z.B. kann mit Hilfe des DM-Schlüssels 34 anstelle eines vollständigen Objektes ein Attribut übertragen werden, auf ein Element eines Feldes oder einer Liste zugegriffen werden. Der Inhalt eines DM-Schlüssels 34 wird in Form einer Abfolge von Bytes dargestellt, deshalb kann der Inhalt des DM-Schlüssels 34 nicht nur den Index eines Feldes sondern auch vollständige Fragen an das Datenobjekt 29 enthalten. Sowohl der Inhalt als auch die Syntax des DM-Schüssels 34 sind für den jeweiligen Datenmanager 15 bis 19 frei wählbar.

Anhand des VU-Schlüssels 33 lokalisiert die Verteilungsunterstützung 12 des lokalen Netzwerkknotens 1 das Datenobjekt 29 auf einem abgelegenen Netzwerkknoten 2, welches das benötigte Element 28 enthält. Die Anfrage mit dem VU-Schlüssel 33 und dem DM-Schlüssel 34 wird von der Verteilungsunterstützung 12 des lokalen Netzwerkknotens 1 an die Verteilungsunterstützung 13 des abgelegenen Netzwerkknotens 2 weitergeleitet.

Die dortige Verteilungsunterstützung 13 liest mittels des VU-Schlüssels 33 über den lokalen Speicherverwalter 26 das gesamte Datenobjekt 29 aus der Datenbank 31. Ist auf diesen Netzwerkknoten 2 ein dem DM-Schlüssel 34 zugeordneter Callback-Komponente 21 vorhanden, wird der Callback-Komponente 21 durch die Verteilungenterstützung 13 das Datenobjekt 29 mit dem DM-Schlüssel 34 übergeben. Anhand des DM-Schlüssels 34 identifiziert die Callback-Komponente 21 innerhalb des Datenobjekts 29 das geforderte Element 28, so dass lediglich das Element 28 und nicht das gesamte Datenobjekt 29 an die Verteilungsunterstützung 13 und weiter an die Verteilungsunterstützung 12 des lokalen Netzwerkknotens 1 verschickt werden kann.

Die Struktur und der Inhalt des Datenobjektes 29 sind dabei für die Vertdiungs-unterstützungen 12 bis 14 nicht sichtbar. Falls die Verteilungsunterstützung 13 des abgelegenen Netzwerkknotens 2 keinen passenden Callback-Komponente 21 gefunden hätte oder ihr kein DM-Schlüssel 34 übergeben worden wäre, dann hätte die Verteilungsunterstützung 13 das gesamte Datenobjekt 29 an die Verteilungsunterstützung 12 des lokalen Netzwerkknotens 1 verschickt. Die Verteilungsunterstützung 12 hätte dann die Möglichkeit mit Hilfe des Callback-Komponente 20 den DM-Schlüssel 34 auszuwerten, um das benötigte Element 28 zu identifizieren. Nachdem die Verteilungsunterstützung 12 das Element 28 an den Datenmanager 15 übermittelt hat, kann der Datenmanager 15 mit einer entsprechenden Information 35 der Anwendung 30 antworten.

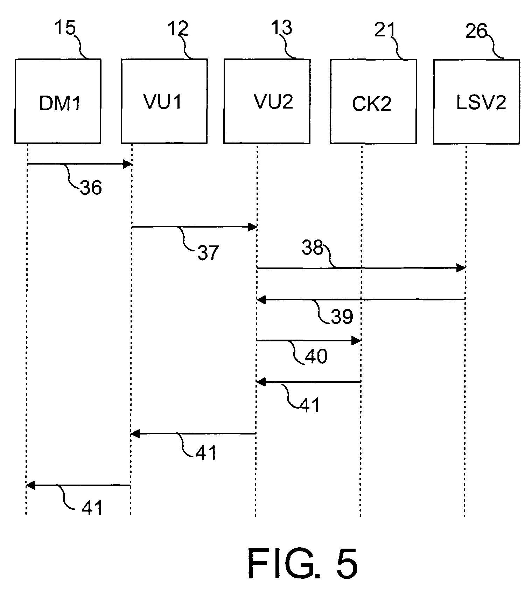

In Fig. 5 ist die zeitliche Reihenfolge der Aktionen während eines Lesevorgangs dargestellt. Die Anwendung 30 fordert eine Information beim Datenmanager 15 (DM1) des lokalen Netzwerkknotens 1 an. Daraufhin schickt der Datenmanager 15 eine Anfrage 36 mit dem VU-Schlüssel 33 und dem DM-Schlüssel 34 an die Verteilungsunterstützung 12 (VU1) des lokalen Netzwerkknotens 1. Die Verteilungsunterstützung 12 lokalisiert anhand des ihr übergebenen VU-Schlüssels 33 das Datenobjekt 29 auf einen abgelegenen Netzwerkknoten 2, auf dem das zu lesende Element 28 gespeichert ist, und fordert durch eine Anfrage 37 bei der Verteilungsunterstützung (VU2) 13 des abgelegenen Netzwerkknoten 2 dieses Element 28 an. Die Verteilungsunterstützung 13 schickt eine Anfrage 38 mit dem VU-Schlüssel 33 an seinen lokalen Speicherverwalter (LSV2) 26. Der lokale Speicherverwalter 26 gibt das entsprechende Datenobjekt 29, in dem das geforderte Element 28 enthalten ist, in einer Antwort 39 an die Verteilungsunterstützung 13 wieder. Die Verteilungsunterstützung 13 ergänzt diese Antwort mit dem DM-Schlüssel 34 und richtet eine Anfrage 40 an die Callback-Komponente (CK2) 21 des Datenmanagers 12. Diese Callback Komponente 21 wertet den DM-Schlüssel 34 aus, und entnimmt dem Datenobjekt 29 das geforderte Element 28. Das Element 28 wird in einer Antwort 41 von der Callback-Komponente 21 an die Verteilungsunterstützung 13 weitergereicht. Die Verteilungsunterstützung 13 schickt die Antwort 41 über die Verteilungsunterstützung 12 bis zum Datenmanager 15 des lokalen Netzwerkknotens 1.

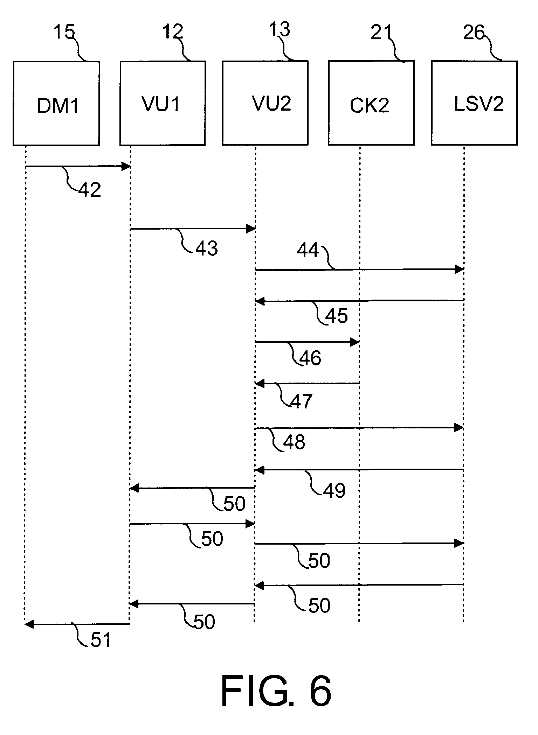

In Fig. 6 ist die zeitliche Reihenfolge der Aktionen während eines Schreibvorgangs dargestellt. Ein Benutzer startet die Anwendung 30 mit der Absicht Daten zu schreiben und diese im Netzwerk systemweit festzuhalten. Die Anwendung 30 teilt dem zuständigen Datenmanager (DM1) 15 des lokalen Netzwerkknotens 1, an dem der Benutzer die Anwendung 30 gestartet hat, diesen Schreibauftrag mit. Der Datenmanager 15 bestimmt wiederum aus diesem Auftrag den VU-Schlüssel 33 und den DM-Schlüssel 34 und schickt diese zusammen mit dem neuen Wert des Elements 28 in einer Aufforderung 42 an die Verteilungsunterstützung (VU1) 12 des lokalen Netzwerkknotens 1. Diese Verteilungsunterstützung 12 lokalisiert anhand des VU-Schlüssels 33 die Verteilungsunterstützung (VU2) 13 des abgelegenen Netzwerkknotens 2 (es können auch mehrere Netzwerkknoten sein), auf dem die Daten gespeichert sind und somit verändert werden müssen. Durch einen Methodenaufruf 43 fordert die Verteilungsunterstützung 12 die Verteilungsunterstützung 13 des abgelegenen Netzwerkknotens 2 auf, das Datenobjekt 29 zu ändern.

Mit einer Anfrage 44 verlangt die Verteilungsunterstützung 13 vom lokalen Speicherverwalter (LSV2) 26 des Netzwerkknotens 2 das dem VU-Schlüssel 33 zugeordnete Datenobjekt 29. Analog zum Lesevorgang schickt der lokale Speicherverwalter 26 als Antwort 45 das geforderte und zuvor aus der Datenbank 31 entnommene Datenobjekt 29 an die Verteilungsunterstützung 13. Die Verteilungsunterstützung 13 richtet eine Anfrage 46 an die Callback-Komponente (CK2) 21 des Datenmanagers 12, in diesem Datenobjekt 29, das durch den DM-Schlüssel 34 spezifizierte Element 28 durch den übergebenen Wert zu überschreiben. Die Callback-Komponente 21 gibt das entsprechend geänderte Datenobjekt 29 mit einer Rückgabe 47 an die Verteilungsunterstützung 13 zurück, welche eine Aufforderung 48 zur Vorbereitung eines Schreibvorgangs mit dem Datenobjekt 29 an den lokalen Speicherverwalter 26 richtet. Mit einer Rückgabe 49 bestätigt der lokale Speicherverwalter 26 seine Bereitschaft zum Schreiben. Anschließend führen die Verteilungsunterstützungen 12 und 13 z.B. den zweiten Teil eines 2-Phasen-Commit-Protokolls 50 aus, bei welchem die Bereitschaft zum Schreiben von der Verteilungsunterstützung 13 an die Verteilungsunterstützungen 12 signalisiert wird und in dessen Verlauf der Speichermanager (LSV2) 26 zur tatsächlichen Durchführung des Schreibvorgangs aufgefordert wird. Der erfolgreiche Abschluss des Schreibvorgangs wird durch die Rückgabe 51 dem Datenmanager 15 bestätigt.

## Patentansprüche

1. Netzwerk mit Netzwerkknoten (1 bis 5) und einem auf allen Netzwerkknoten (1 bis 5) verteilten Softwaresystem
- mit einer als Verteilungsunterstützung (12 bis 14) bezeichneten Softwarekomponente auf jedem Netzwerkknoten (1 bis 5) zum Zugriff auf die Daten einer verteilten Datenbank (31), und zur Kommunikation mit anderen Verteilungsunterstützungen (12 bis 14) unterschiedlicher Netzwerkknoten, und
- mit mindestens einer als Datenmanager (15 bis 19) bezeichneten Softwarekomponente, die als Verbindung der Datenbank (31) mit anderen Komponenten dient und eine Callback-Komponente (20 bis 24) zum Zugriff auf wenigstens ein Element (28) eines Datenobjekts (29) beinhaltet, und
- mit einem aus zwei Teilen bestehenden Schlüssel, dessen erster Teil ein Verteilungsunterstützungs-Schlüssel (33) zur Identifizierung eines Datenobjektes (29) durch die Verteilungsunterstützung (12 bis 14) ist, und dessen zweiter Teil, ein Datenmanager-Schlüssel (34) zur Identifizierung wenigstens eines gesuchten Elements (28) eines Datenobjekts (29) ist.

2. Netzwerk nach Anspruch 1
**dadurch gekennzeichnet,**
**dass** der Datenmanager (15 bis 19) mittels der Callback-Komponente (20 bis 24) von der Verteilungsunterstützung (12 bis 14) zur Interpretation der für die Verteilungsunterstützung (12 bis 14) bestimmten Daten genutzt wird,
**dass** der Datenmanager (15 bis 19) zur Generierung und Auswertung des Datenmanager-Schlüssels (34), vorgesehen ist, und
**dass** die Syntax und Inhalt des Datenmanager-Schlüssels (34) frei wählbar sind.

3. Netzwerk nach Anspruch 2
**dadurch gekennzeichnet,**
**dass** die Verteilungsunterstützung (12 bis 14) zur Wiedereingliederung eines zuvor ausgefallenen Netzwerkknotens (1 bis 5) und zur Eingliederung eines neu ins Netzwerk hinzugsfügten Netzwerkknotens (1 bis 5), und
**dass** die Verteilungsunterstützung (12 bis 14) zur Nutzung der ihr durch die Datenmanager (15 bis 19) zur Verfügung gestellten Dienste vorgesehen ist.

4. Netzwerk nach Anspruch 3
**dadurch gekennzeichnet,**
**dass** ein lokaler Speicherverwalter (26 bis 27) von der Verteilungsunterstützung (12 bis 14) des selben Netzwerkknotens (1 bis 5) eine Aufforderung zur Veränderung seiner Datenbank (31) erhält.
